# EUROPEAN PATENT APPLICATION

(11) **EP 2 671 678 A1**
(43) Date of publication of application: **11.12.2013**
(21) Application number: 12742002.4
(22) Date of filing: 26.01.2012
(51) Int. Cl.: B25B 21/00, G21C 13/02, G21C 19/02

(54) **BOLT TENSIONER**

(30) Priority: 01.02.2011 JP 2011020156
(71) Applicant: Mitsubishi Heavy Industries, Ltd., Tokyo 108-8215 (JP)
(72) Inventor: IMI, Katsumi, Minato-ku, Tokyo 108-8215 (JP)
(74) Representative: Intès, Didier Gérard André
(86) International application number: PCT/JP2012/051688
(87) International publication number: WO 2012/105411

(57) **Abstract**

A bolt tensioner is provided with: a housing (201); a puller bar (202) located in the axial center portion in the housing (201); an oil pump unit (115) that enables the puller bar (202) to move in the axial direction; a puller bar socket (203) that connects the puller bar (202) and the stud bolts (65) in such a manner that they cannot move relatively in the axial direction; a locking ring (205) that operates the puller bar socket (203); a nut socket (207) that is rotatably supported in the axial center portion in the housing (201) and closer to the front end than the puller bar (202); and a nut rotation device (209) that is attached to the outer periphery of the housing (201) and that is capable of rotating the nut socket (207) positively and negatively. The housing (201) is structured with a first housing (231) that houses the puller bar (202) and a second housing (232) that houses the nut socket (207), and the first and second houses are integrally connected so that regardless of the shape of the member to be fastened, nuts can be appropriately fastened to/loosened from stud bolts.

## Description

### Field

The present invention relates to a bolt tensioner that fastens a nut by rotating it while applying a tension to a stud bolt when a lid is attached to the top of a reactor vessel and that also loosens the nut by rotating it while applying a tension to the stud bolt when the lid fixed to the top of the reactor vessel is detached, for example.

### Background

For example, a pressurized water reactor (PWR: Pressurized Water Reactor) uses light water as a reactor coolant and a neutron moderator, makes the light water to be high-temperature and high-pressure water that does not boil throughout the reactor core, feeds the high-temperature and high-pressure water to a steam generator so as to generate steam by way of heat exchange, and feeds the steam to a turbine generator so as to generates electrical power.

A reactor vessel used in a pressurized water reactor of this type is structured with a reactor vessel body and a reactor vessel lid attached to its top so that a structure inside reactor can be inserted inside the reactor vessel. The reactor vessel lid can open and close with respect to this reactor vessel body. When the reactor vessel lid is detachably attached to this reactor vessel body, stud bolts penetrate through an outer peripheral flange of the reactor vessel lid and screwed into the top outer peripheral flange of the reactor vessel body so as to be implanted, and nuts are screwed while applying a tension to thes stud bolts so as to be fastened.

As a fastening/loosening device of this type, devices described in patent literatures 1, 2 are known. In the device described in patent literature 1, a bolt tensioner is used for an operation. In patent literature 2, a general bolt tensioner is described.

### Citation List

### Patent Literature

Patent Literature 1: Japanese Patent Application Laid-open No. 10-227888
Patent Literature 2: Japanese Examined Patent Publication No. 60-057996

### Summary

### Technical Problem

A general bolt tensioner is structured by a housing having a cylindrical shape which houses a puller bar, a piston, a locking ring, a puller bar socket, a nut socket, and the like, and to which a socket rotation device is attached on a side thereof. The bolt tensioner is operated by engaging the front end thereof with a stud bolt and a nut.

Note here that a reactor vessel body and a reactor vessel lid of a reactor vessel may vary in shape according to their specifications and the like. Therefore, a bolt tensioner is located and operated while avoiding interference with protrusions of the reactor vessel lid.
In this case, the bolt tensioner is required to apply a tension to a stud bolt in a direction away from the reactor vessel lid when it rotates (fastens or loosens) a nut, and thus a contact surface having a predetermined region (area) that contacts with the upper surface of the reactor vessel lid has to be provided on the front end of the bolt tensioner. However, it is difficult to form the front end shape of the bolt tensioner to secure a contact surface having the predetermined region with respect to reactor vessel lids having various shapes. As a result, a plurality of bolt tensioners have to be provided for reactor vessel lids having various shapes, and thus the cost of equipment increases, which is a problem.

The present invention is made to solve the above mentioned problem, and an object thereof is to provided a bolt tensioner capable of appropriately fasten and loosen a nut to/from a stud bolt regardless of a shape of a member to be fastened.

### Solution to Problem

According to an aspect of the present invention in order to achive the above object, there is provided a bolt tensioner that fastens or loosens nuts to be respectively screwed to a plurality of stud bolts by rotating the nuts while applying a tension to the stud bolts in an axial direction away from an object to be fastened, with respect to which the plurality of stud bolts are arranged by screwing them, the bolt tensioner including: a housing having a cylindrical shape;
a puller bar located in an axial center portion in the housing; a puller bar moving device that enables the puller bar to move in the axial direction; a puller bar socket that connects the puller bar and the stud bolts in such a manner that they cannot move relatively in the axial direction; a locking ring that operates the puller bar socket; a nut socket that is rotatably supported in the axial center portion in the housing and closer to the front end than the puller bar; and a driving device that is attached to an outer periphery of the housing and that is capable of rotating the nut socket positively and negatively, wherein the housing is structured with a first housing that houses the puller bar and a second housing that houses the nut socket, the first and second houses being integrally connected.

Therefore, the housing is structured with the first housing and the second housing, and thus an appropriate second housing according to a shape of an object to be fastened can be selected and attached. Consequently, regardless of a shape of a member to be fastened, a nut can be appropriately fastened to/loosened from a stud bolt. In addition, since the housing is made to have the divided structure, the maintainability of the puller bar, the nut socket, and the like can be improved.

In the bolt tensioner according to the present invention, it is characterized that the driving device is located between the first housing and the second housing.

Therefore, the driving device can be easily attached to the housing, and thus, the assemblability can be improved and the maintainability of the driving device can be improved.

In the bolt tensioner according to the present invention, it is characterized that the driving device is located at the front end of the first housing.

Therefore, the second housing can be removed from the first housing without affecting the driving device, and the maintainability of the driving device can be improved.

In the bolt tensioner according to the present invention, it is characterized that the nut socket has an outer periphery to which an externally-toothed driven gear is fixed, and the nut socket is supported by the first housing, and an intermediate gear of the driving device meshes the driven gear.

Therefore, only the second housing can be easily attached and detached without affecting the driving device or the nut socket.

In the bolt tensioner according to the present invention, it is characterized that the second housing is fixed to the first housing by the plurality of fixing bolts penetrating through the second housing from a front end side thereof and screwed into the front end of the first housing.

Therefore, the second housing can be attached to/detached from the first housing by rotating the plurality of fixing bolts.

### Advantageous Effects of Invention

According to the bolt tensioner of the present invention, the housing is structured with the first housing that houses the puller bar and the second housing that houses the nut socket, the first and second houses being integrally connected. Therefore, regardless of the shape of the member to be fastened, the nuts can be appropriately fastened to/loosened from the stud bolts.

### Brief Description of Drawings

FIG. 1 is a perspective view illustrating an overall structure of a fastening/loosening device according to one embodiment of the present invention.
FIG. 2 is a plan view illustrating the overall structure of the fastening/loosening device of this embodiment.
FIG. 3 is a perspective view illustrating the fastening/loosening device of this embodiment.
FIG. 4 is a front view illustrating the fastening/loosening device of this embodiment.
FIG. 5 is a side view illustrating the fastening/loosening device of this embodiment.
FIG. 6 is a cross-sectional view illustrating a bolt tensioner.
FIG. 7-1 is a schematic view illustrating an operation of the bolt tensioner.
FIG. 7-2 is a schematic view illustrating an operation of the bolt tensioner.
FIG. 7-3 is a schematic view illustrating an operation of the bolt tensioner.
FIG. 7-4 is a schematic view illustrating an operation of the bolt tensioner.
FIG. 7-5 is a schematic view illustrating an operation of the bolt tensioner.
FIG. 8 is a plan view illustrating a guide device in the fastening/loosening device of this embodiment.
FIG. 9 is a cross-sectional view illustrating a divided structure of the bolt tensioner in the fastening/loosening device of this embodiment.
FIG. 10-1 is a schematic view illustrating the bolt tensioner with a component replaced.
FIG. 10-2 is a schematic view illustrating the bolt tensioner with a component replaced.
FIG. 11 is a schematic structure view of a nuclear power plant.
FIG. 12 is a vertical cross-sectional view illustrating a pressurized water reactor.

### Description of Embodiments

A preferable embodiment of a bolt tensioner according to the present invention will be hereinafter described in detail referring to the accompanying drawings. Note that this embodiment does not limit the present invention, and if a plurality of embodiments are provided, the present invention covers a structure made by combining the respective embodiments.

### Embodiment

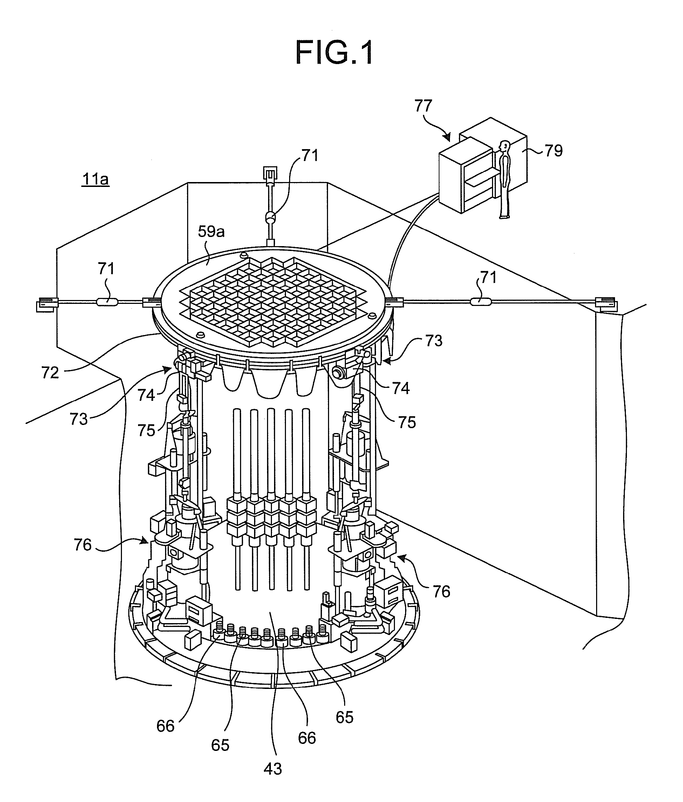

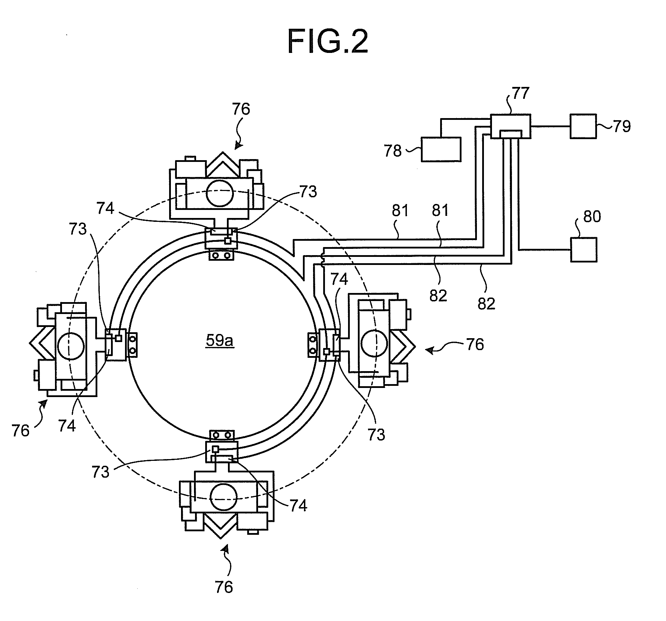

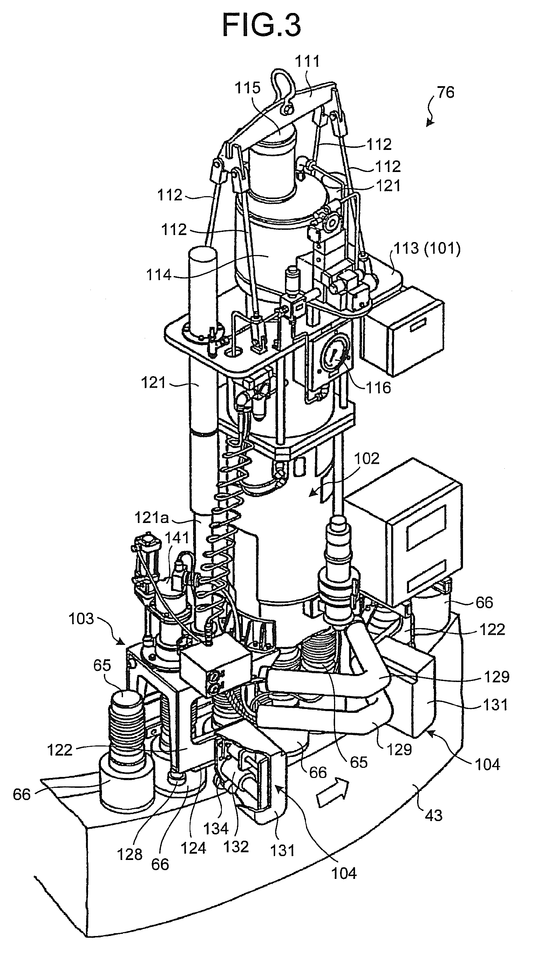

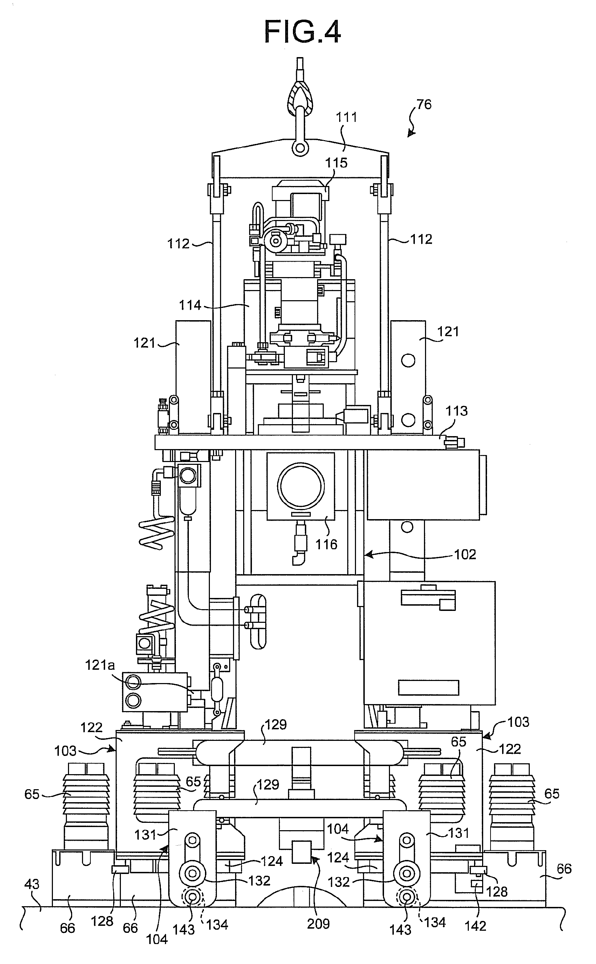

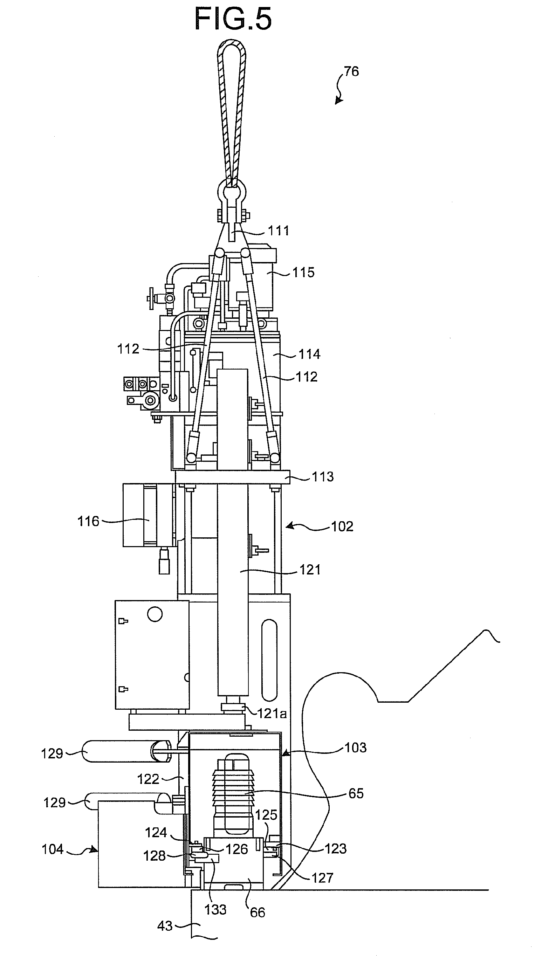

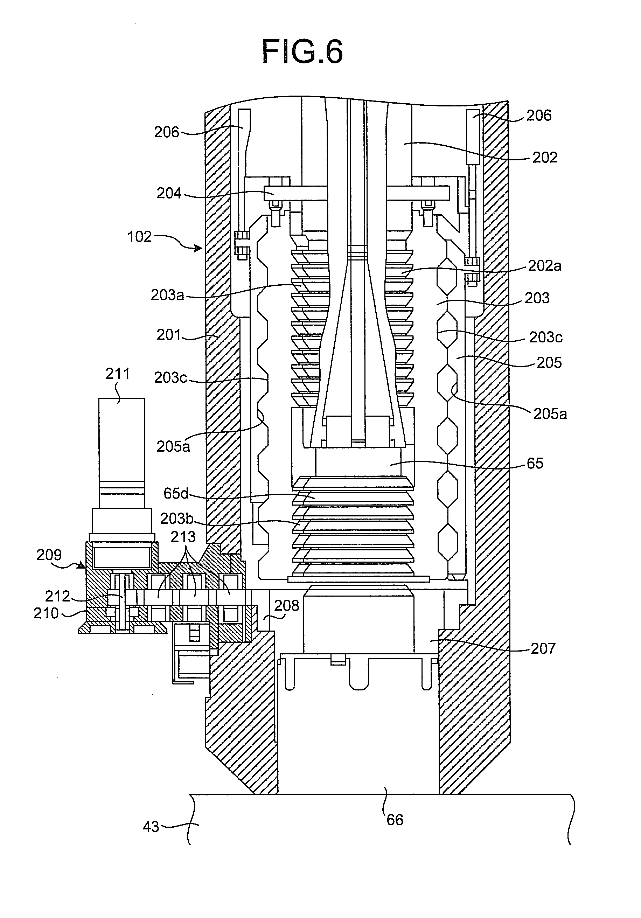

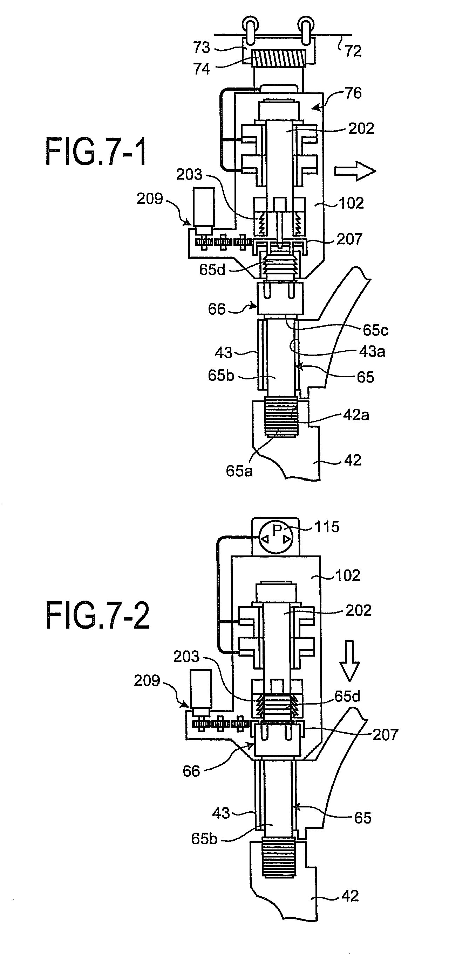

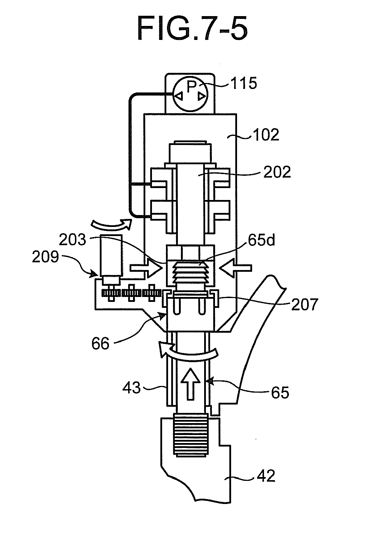

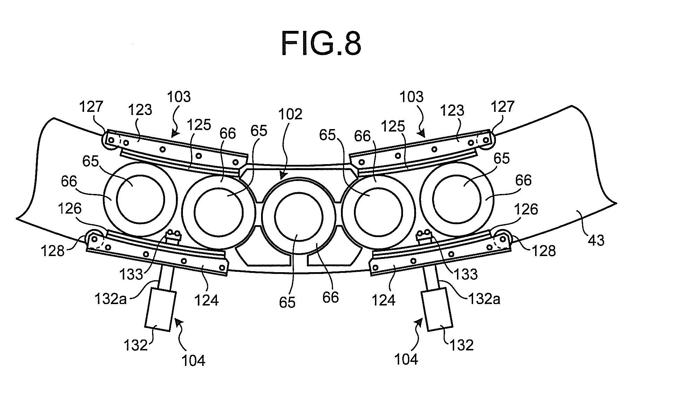

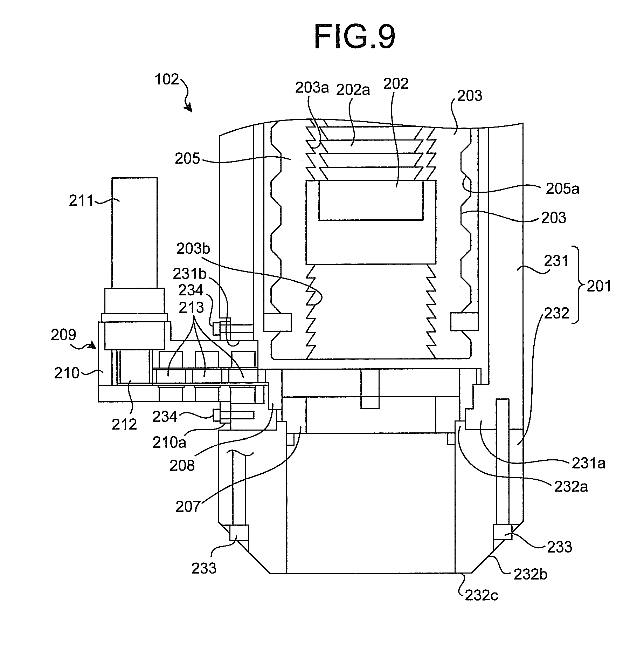

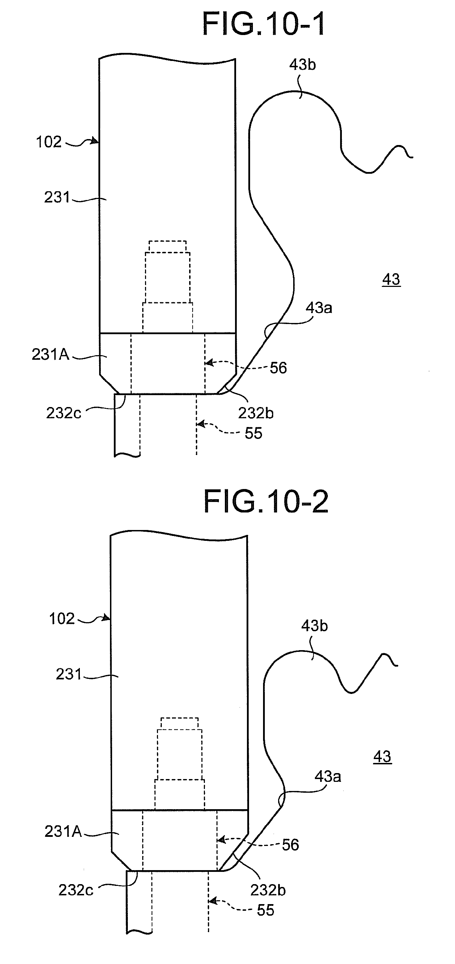

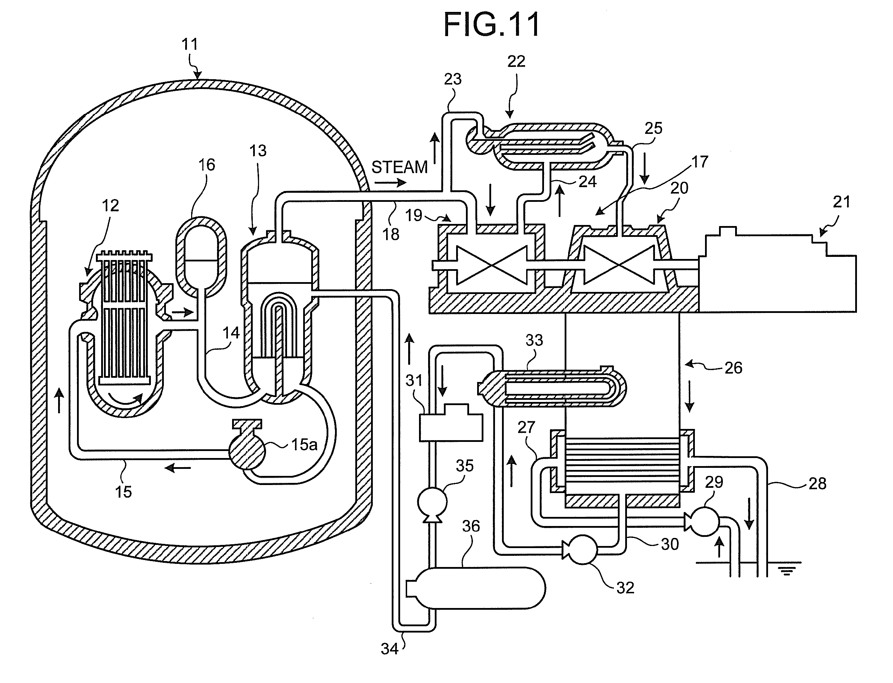

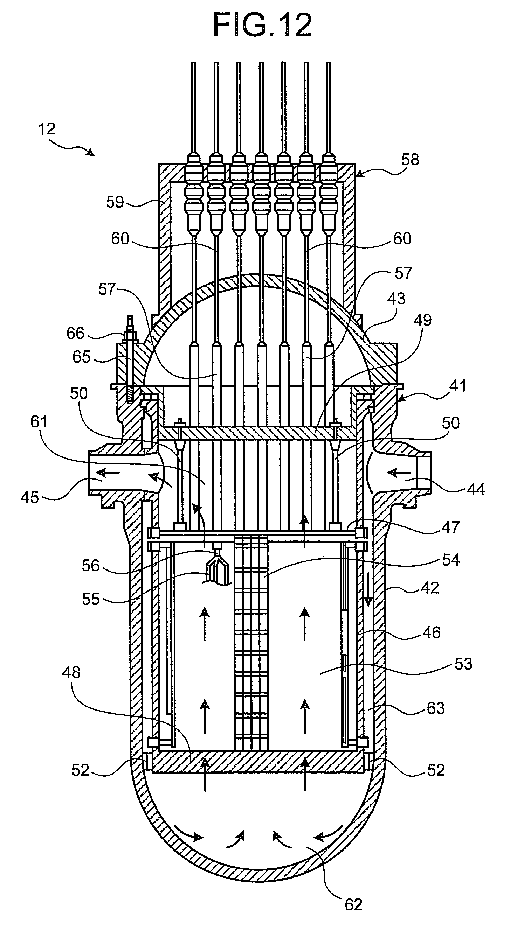

FIG. 1 is a perspective view illustrating a fastening/loosening device according to one embodiment of the present invention, FIG. 2 is a plan view illustrating the overall structure of the fastening/loosening device of this embodiment, FIG. 3 is a perspective view of the fastening/loosening device of this embodiment, FIG. 4 is a front view illustrating the fastening/loosening device of this embodiment, FIG. 5 is a side view illustrating the fastening/loosening device of this embodiment, FIG. 6 is a cross-sectional view illustrating a bolt tensioner, FIGS. 7-1 to 7-5 are schematic views illustrating an operation of the bolt tensioner, FIG. 8 is a plan view illustrating a guide device in the fastening/loosening device of this embodiment, FIG. 9 is a cross-sectional view illustrating a divided structure of the bolt tensioner in the fastening/loosening device of this embodiment, FIGS. 10-1 and 10-2 are schematic views each illustrating the bolt tensioner with a component replaced, FIG. 11 is a schematic structure view of a nuclear power plant, FIG. 12 is a vertical cross-sectional view illustrating a pressurized water reactor.

A reactor of this embodiment is a pressurized water reactor (PWR: Pressurized Water Reactor) that uses light water as a reactor coolant and a neutron moderator, makes the light water to be high-temperature and high-pressure water that does not boil throughout the reactor core, feeds the high-temperature and high-pressure water to a steam generator so as to generate steam by way of heat exchange, and feeds the steam to a turbine generator so as to generate electrical power.

In the nuclear power plant having the pressurized water reactor of this embodiment, as illustrated in FIG. 11, a reactor containment vessel 11 contains a pressurized water reactor 12 and a steam generator 13, these pressurized water reactor 12 and steam generator 13 are connected via cooling water pipes 14, 15, the cooling water pipe 14 is provided with a pressurizer 16, and the cooling water pipe 15 is provided with a cooling water pump 15a. In this case, light water is used as a moderator and primary cooling water (coolant), and in order to suppress boiling of the primary cooling water in the reactor core portion, the primary cooling system controls to maintain a high pressure state of about 150 to 160 atm by the pressurizer 16. Thus, in the pressurized water reactor 12, light water as primary cooling water is heated using low-enriched uranium or MOX as a fuel (nuclear fuel), and the high-temperature primary cooling water is fed to the steam generator 13 via the cooling water pipe 14 while maintained at a predetermined high pressure by the pressurizer 16. In this steam generator 13, a heat exchange is carried out between high-pressure and high-temperature primary cooling water and secondary cooling water, and the cooled primary cooling water is fed back to the pressurized water reactor 12 via the cooling water pipe 15.

The steam generator 13 is connected to a steam turbine 17 via a cooling water pipe 18. This steam turbine 17 has a high pressure turbine 19 and a low pressure turbine 20, and a power generator 21 is connected to the steam turbine 17. Between the high pressure turbine 19 and the low pressure turbine 20, a moisture separator heater 22 is provided. A cooling water branching pipe 23 branched off from the cooling water pipe 18 is connected to the moisture separator heater 22, while the high pressure turbine 19 and the moisture separator heater 22 are connected by a low temperature reheating pipe 24, and the moisture separator heater 22 and the low pressure turbine 20 are connected by a high heat reheating pipe 25.

The low pressure turbine 20 of the steam turbine 17 has a condenser 26 and to this condenser 26, a water intake pipe 27 and a water drainage pipe 28 for feeding and draining cooling water (seawater, for example) are connected. This water intake pipe 27 has a circulation water pump 29, and the other end of the water intake pipe 27 is located under the sea with the water drainage pipe 28. In addition, this condenser 26 is connected to a deaerator 31 via a cooling water pipe 30, and this cooling water pipe 30 is provided with a condensate pump 32 and a low-pressure feedwater heater 33. The deaerator 31 is connected to the steam generator 13 via a cooling water pipe 34, and this cooling water pipe 34 is provided with a water feed pump 35 and a high-pressure feedwater heater 36.

Therefore, steam generated by heat exchange with high-pressure and high-temperature primary cooling water in the steam generator 13 is fed to the steam turbine 17 (from the high pressure turbine 19 to the low pressure turbine 20) via the cooling water pipe 18. This steam drives the steam turbine 17 and the power generator 21 generates electrical power. At this time, after driving the high pressure turbine 19, moisture contained in the steam from the steam generator 13 is removed and also heated in the moisture separator heater 22, and then the steam drives the low pressure turbine 20. Then, the steam that has driven the steam turbine 17 is cooled using seawater in the condenser 26 and becomes condensate. The condensate is heated in the low-pressure feedwater heater 33 by low-pressure steam that has been extracted from the low pressure turbine 20, for example. After impurities such as dissolved oxygen and noncondensable gas (ammonia gas) is removed in the deaerator 31, the condensate is heated in the high-pressure feedwater heater 36 by high-pressure steam extracted from the high pressure turbine 19, for example, and fed back to the steam generator 13.

In the pressurized water reactor 12 applied in the nuclear power plant thus structured, as illustrated in FIG. 12, a reactor vessel 41 is structured with a reactor vessel body 42 and a reactor vessel lid 43 attached to its top so that a structure inside reactor can be inserted inside the reactor vessel 41. The reactor vessel lid 43 can open and close with respect to this reactor vessel body 42. The reactor vessel body 42 has a cylindrical shape with its top open and bottom closed spherically. An inlet nozzle 44 and an outlet nozzle 45 for feeding and draining light water (coolant) as primary cooling water are formed in the upper portion of the reactor vessel body 42.

Inside the reactor vessel body 42 and lower than the inlet nozzle 44 and the outlet nozzle 45, a reactor core basin 46 having a cylindrical shape is located with a predetermined gap from the inner surface of the reactor vessel body 42. To the top of this reactor core basin 46, a top reactor core plate 47 having a disc shape and formed with multiple through holes (not illustrated) is connected, and to the bottom thereof, a bottom reactor core plate 48 also having a disc shape and formed with multiple through holes (not illustrated) is connect. In addition, in the reactor vessel body 42, a top reactor core support plate 49 having a disc shape and located above the reactor core basin 46 is fixed, and from this top reactor core support plate 49, the top reactor core plate 47, then the reactor core basin 46 is suspended and supported via a plurality of reactor core support rods 50. On the other hand, the bottom reactor core plate 48, then the reactor core basin 46 is positioned and held with respect to the inner surface of the reactor vessel body 42 using a plurality of radial keys 52.

A reactor core 53 is formed by the reactor core basin 46, the top reactor core plate 47, and the bottom reactor core plate 48, and in this reactor core 53, multiple fuel assemblies 54 are located. This fuel assembly 54 is structured by bundling multiple fuel rods in a lattice form using support grids, and a top nozzle is fixed to the top end portion of the fuel assembly 54 while a bottom nozzle is fixed to the bottom end portion thereof, which is not illustrated. A plurality of control rods 55 are brought together at their top end portions to be a control rod cluster 56 that can be inserted into the fuel assembly 54. Through the top reactor core support plate 49, multiple control rod cluster guide tubes 57 penetrate and are supported. The bottom ends of the control rod cluster guide tubes 57 extend to the control rod cluster 56.

On the top of the reactor vessel lid 43 constituting the reactor vessel 41, control rod driving devices 58 of magnetic jack are provided, and housed in a housing 59 that is integrated with the reactor vessel lid 43. The top end portions of the multiple control rod cluster guide tubes 57 extend to the control rod driving device 58, and from this control rod driving device 58, control rod cluster drive shafts 60 extend to the fuel assembly 54 through the control rod cluster guide tubes 57, and can grasp the control rod cluster 56. Through the top reactor core support plate 49, multiple instrumentation guide tubes in a reactor penetrates and are supported by this top reactor core support plate 49, and the bottom end portions thereof extend to the fuel assembly 54 so that a sensor capable of measuring neutron flux can be inserted therethrough, which is not illustrated.

This control rod driving device 58 controls output of the reactor by moving up and down the control rod cluster drive shafts 60 using the magnetic jack. The control rod cluster drive shafts 60 extend in the vertical direction, are connected to the control rod cluster 56, and are formed with a plurality of circumferential grooves on the surface thereof at a regular pitch in the longitudinal direction.

Therefore, the control rod cluster drive shaft 60 is moved by the control rod driving device 58, and the control rod 55 is inserted into the fuel assembly 54 so as to control nuclear fission in the reactor core 53. The generated heat energy heats light water filled in the reactor vessel 41, the high-temperature light water is discharged from the outlet nozzle 45 and fed to the steam generator 13 as described above. Specifically, nuclear fission of uranium or plutonium as a fuel constituting the fuel assembly 54 emits neutrons, and light water as a moderator and primary cooling water decreases kinetic-energy of high-speed neutrons that have been emitted so as to make thermal neutrons so that another nuclear fission becomes easy to occur. The light water also draws generated heat so as to cool the thermal neutrons. In addition, the control rod 55 is inserted into the fuel assembly 54 so as to regulate the number of neutrons generated in the reactor core 53, and is quickly inserted to the reactor core 53 when the reactor is stopped urgently.

In the reactor vessel 41, an upper plenum 61 communicating with the outlet nozzle 45 is formed above the reactor core 53, and a lower plenum 62 is formed below the reactor core 53. Between the reactor vessel 41 and the reactor core basin 46, a downcomer section 63 communicating with the inlet nozzle 44 and the lower plenum 62 is formed. Therefore, light water flows into the reactor vessel body 42 from four inlet nozzles 44, flows downward through the downcomer section 63 to the lower plenum 62, flow upward while guided upward by the spherical inner surface of this lower plenum 62, passes through the bottom reactor core plate 48, and then flows into the reactor core 53. The light water that has flowed into this reactor core 53 absorbs heat energy generated from the fuel assembly 54 constituting the reactor core 53 so as to cool the fuel assembly 54. On the other hand, the light water becomes high temperature, passes through the top reactor core plate 47, flows up to the upper plenum 61, and is discharged through the outlet nozzle 45.

The thus structured reactor vessel 41 is constituted of the reactor vessel body 42 and the reactor vessel lid 43 as described above, and this reactor vessel lid 43 is detachably attached to the top of the reactor vessel body 42 using a plurality of stud bolts 65 and a plurality of nuts 66. In this case, each of the stud bolts 65 has a bottom screw section 65a, a penetrating section 65b, a top screw section 65c, and a parallel groove section 65d as illustrated in FIG. 7-1 in detail. The stud bolt 65 having the top screw section 65c to which the nut 66 is screwed has the penetrating section 65b that penetrates through an attachment hole 43a formed in the reactor vessel lid 43. In a state where the bottom screw section 65a is screwed into a screw hole 42a formed in the reactor vessel body 42, the nut 66 is screwed while applying a tension to the stud bolt 65 in an axial direction away from the reactor vessel body 42 (upper direction in this embodiment) so as to fasten or loosen the nut 66, whereby the reactor vessel lid 43 can be detachably attached to the reactor vessel body 42.

In this embodiment, members to be fastened of the present invention are the reactor vessel body 42 and the reactor vessel lid 43. The bolt tensioner of this embodiment enables the reactor vessel lid 43 to be attached to/detached from the reactor vessel body 42 using the plurality of stud bolt 65 and the nuts 66. The fastening/loosening device of this embodiment is herein described in detail.

In this embodiment, as illustrated in FIGS. 1 and 2, with respect to a building 11a constituting the reactor containment vessel 11 (refer to FIG. 11) a support disc 59a of the housing 59 is supported by a plurality of support rods 71. To the outer periphery of this support disc 59a, a guide rail 72 is fixed, and four transport devices (electric trolley hoist) 73 are movably supported thereon. Each of these four transport devices 73 has a lift device 74. A fastening/loosening device 76 is suspended and supported via a suspending cable 75, and is liftable up and down. In this case, the four transport devices 73 and fastening/loosening devices 76 are structured almost similarly and arranged at regular intervals (90 degree interval) in the peripheral direction.

To a transport operation device 77, a tension control device 78 is connected, and a power source unit 79 and an air pressure source 80 are connected. The transport operation device 77 is connected to the respective transport devices 73 and the respective fastening/loosening devices 76 by power cables 81, and is connected to the respective fastening/loosening devices 76 by pneumatic hoses 82.

In the fastening/loosening devices 76, the plurality of stud bolts 65 are arranged with respect to the the outer periphery of the reactor vessel body 42 by screwing them and the reactor vessel lid 43 as described above. To these plurality of stud bolts 65, the nuts 66 are respectively screwed, and the nuts 66 are rotated while a tension is applied to the stud bolts 65 in the axial direction away from the reactor vessel body 42 so as to be fastened or loosened.

In other words, the fastening/loosening device 76 is constituted of a device body 101, a bolt tensioner 102, two guide devices 103, and two positioning devices 104 as illustrated in FIGS. 3 to 5.

A hanger 111 can be suspended and supported by the suspending cable 75 of the lift device 74 in the transport device 73, and a plurality of suspending rods 112 support a support plate 113. The device body 101 is constituted of these hanger 111, suspending rods 112, support plate 113, and the like. Therefore, when the upper part of the device body 101 is supported by the transport device 73, the device body 101 is supported movably along a direction of arranging stud bosts 65 (the periphery direction of the reactor vessel body 42 and the reactor vessel lid 43).

The bolt tensioner 102 is supported in such a manner that the upper portion thereof penetrates through the center part of the support plate 113, and on the upper portion, an oil tank 114, an oil pump unit (puller bar moving device) 115, and a pressure meter 116 are located. Therefore, because the bolt tensioner 102 is attached to the device body 101, the bolt tensioner 102 is movable along the axial direction of the stud bolt 65 by operation of the lift device 74.

In this bolt tensioner 102, a housing 201 having a cylindrical shape is fixed in such a manner that the upper portion thereof is fitted into the support plate 113, and the front end thereof can abut on the upper surface of the reactor vessel lid 43 as illustrated in FIG. 6 A puller bar 202 has a cylindrical shape having a diameter smaller than the housing 201, and is housed in the center portion of this housing 201. This puller bar 202 is movably fitted to the inner peripheral surface of the housing 201 via a piston (not illustrated), and is movable along the axial direction (vertically) by a pressure of oil fed and drained by a oil pump unit 115. The puller bar 202 is formed with a parallel groove section 202a on its bottom end portion.

A puller bar socket 203 has a cylindrical shape divided into four, and located between the housing 201 and the bottom end portion of the puller bar 202, and between the housing 201 and the stud bolt 65. This puller bar socket 203 has a top end portion supported by a bottom portion of the puller bar 202 via a collar 204. Each member obtained by dividing into four is movable in the radial direction and is supported by being pressing outward. This puller bar socket 203 is formed with a top engagement groove section 203a on the top inner peripheral surface, and the top engagement groove section 203a engages with the parallel groove section 202a of the puller bar 202. The pullar bar socket 203 is also formed with a bottom engagement groove section 203b on the bottom inner peripheral surface, and the bottom engagement groove section 203b engages with the parallel groove section 65d of the stud bolt 65. In addition, the puller bar socket 203 is formed with a corrugation 203c on its outer peripheral surface.

A locking ring 205 having a cylindrical shape is located between the housing 201 and the puller bar socket 203. This locking ring 205 is formed with a corrugation 205a on the inner peripheral surface thereof, and the corrugation 205a can be fitted to the corrugation 203c of the puller bar socket 203. The locking ring 205 is liftable up and down by a plurality of air cylinders 206 attached to the inner peripheral surface of the housing 201. Therefore, when the locking ring 205 is in the lift-up position, the puller bar socket 203 moves outwardly in the radial direction, the corrugation 205a is fitted to the corrugation 203c of this puller bar socket 203, each of the engagement groove sections 203a, 203b does not engage with the parallel groove section 202a of the puller bar 202 or the parallel groove section 65d of the stud bolt 65 as illustrated on the left side of FIG. 6. On the other hand, when the locking ring 205 is in the lift-down position as illustrated on the right side of FIG. 6, the corrugation 205a pushes the corrugation 203c of the puller bar socket 203, the puller bar socket 203 moves inwardly in the radial direction, the engagement groove sections 203a, 203b respectively engage with the parallel groove section 202a of the puller bar 202 and the parallel groove section 65d of the stud bolt 65.

The housing 201 has the bottom end inner periphery on which a nut socket 207 is rotatably supported, and has the outer periphery to which a driven gear 208 is fixed. This nut socket 207 is relatively movable with respect to the nut 66 in the axial direction, while it is integrally rotatable in the circumferential direction. The housing 201 has the bottom end outer periphery to which a nut rotation device 209 for rotating the nut socket 207 is attached. This nut rotation device 209 is constituted of a case 210 fixed to the housing 201, an electric servomotor 211, a drive gear 212, and three intermediate gears 213. Therefore, when the electric servomotor 211 positively rotates the drive gear 212, the rotation drive force is transmitted to the driven gear 208 via the respective intermediate gears 213, rotates the nut socket 207, and rotates the nut 66, whereby the nut 66 can be fastened. On the other hand, when the electric servomotor 211 negatively rotates the drive gear 212, the rotation drive force is transmitted to the driven gear 208 via the respective intermediate gears 213, rotates the nut socket 207, and rotates the nut 66, whereby the nut 66 can be loosened.

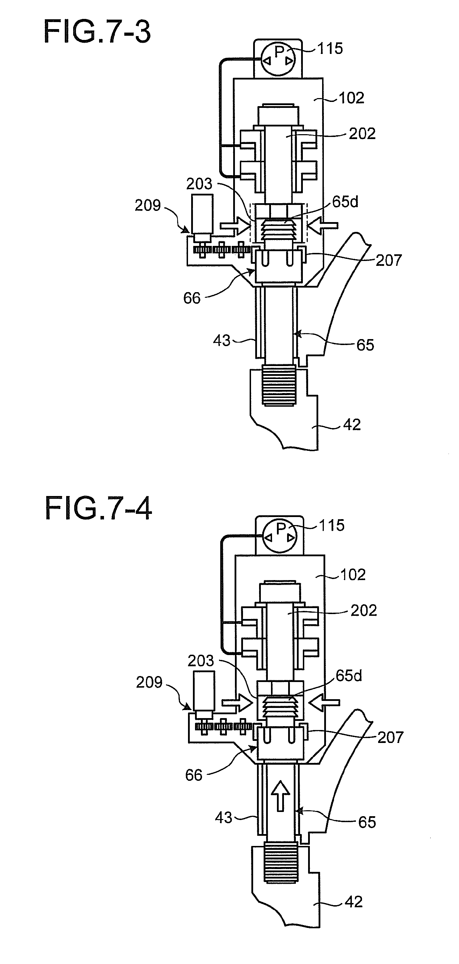

Therefore, as illustrated in FIG. 7-1, the transport device 73 firstly moves the fastening/loosening device 76, and stops at a predetermined position, that is, a position between the bolt tensioner 102, and the stud bolt 65 and the nut 66. Next, as illustrated in FIG. 7-2, the lift device 74 lifts down the fastening/loosening device 76 so as to make the bolt tensioner 102 engage with the stud bolt 65 and the nut 66. As illustrated in FIG. 7-3, the puller bar socket 203 is then moved inwardly in the radial direction, and the parallel groove section 65d of the stud bolt 65 is chucked. In this state, as illustrated in FIG. 7-4, the oil pump unit 115 is operated to lift up the puller bar 202 so as to apply a tension in the axial direction away from the reactor vessel body 42 (upper direction) to the stud bolt 65. The nut rotation device 209 is then operated as illustrated in FIG. 7-5 so as to rotate the nut socket 207, and rotate the nut 66, whereby the nut 66 can be fastened and loosened.

In the fastening/loosening device 76, as illustrated in FIGS. 3 to 5, the guide devices 103 are provided at anterior and posterior positions with respect to the bolt tensioner 102 in the moving direction of the device body 101. These anterior/posterior guide devices 103 have symmetry shapes about the center line of the bolt tensioner 102, and are substantially similarly structured.

In other words, the bodies of anterior/posterior cylinders 121 are fixed to the support plate 113, and box bodies 122 having a cross-section of an inverted U shape are connected to the front ends of the piston rods 121a that extend downward. Note that the cylinders 121 have a limitation of the longest extension position of the piston rods 121a. As illustrated in detail in FIG. 8, in each of these box bodies 122, an inner guide member 123 and an outer guide member 124 are attached to both of left and right sides in the moving direction of the device body 101. Guide pieces 125, 126 are fixed to these guide members 123, 124 respectively on their sides facing each other, and these guide pieces 125, 126 have curved shapes along the arranging direction (circumferential direction) of the stud bolts 65. In this case, each of the guide pieces 125, 126 can contact with the outer peripheries of two (or three or more) adjacent nuts 66. In addition, to the respective guide members 123, 124, guide rollers 127, 128 respectively having rotation axes along the vertical direction are attached at the anterior ends and the posterior ends.

In this case, the box body 122, the guide members 123, 124, the guide pieces 125, 126, the guide rollers 127, 128, and the like constitute the each guide device 103.
The cylinders 121 also serve as dampers when the insides thereof are filled with oil. Even if the bolt tensioner 102 lits up and down with the device body 101, the device body 101 and the guide devices 103 relatively move by extension and contraction of the piston rods 121a. In addition, in two guide devices 103, the respective box bodies 122 are connected by two upper and lower connect members 129 at the outside of the circumferential direction, and thus a predetermined rigidity is secured.

Therefore, the guide piece 125, 126 and the guide roller 127, 128 in each of these guide members 123, 124 can guide the bottom of the device body 101 by contacting with the outer periphery of each of the nut 66 screwed to each of the stud bolt 65 from both of the left and right sides of the device body 101.

In the fastening/loosening device 76, as illustrated in FIGS. 3 to 5, positioning devices 104 are provided together with the guide devices 103 at anterior and posterior positions with respect to the bolt tensioner 102 in the moving direction of the device body 101. These anterior/posterior positioning devices 104 are attached to the guide devices 103, have symmetry shapes about the center line of the bolt tensioner 102, and are substantially similarly structured.

In other words, on a side of the box body 122 of the each guide device 103 (outer side of the reactor vessel lid 43 in the circumferential direction), a box-type case 131 is fixed, and in this case 131, an air cylinder 132 is attached. In this air cylinder 132, a piston rod 132a (refer to FIG. 8) can extend and contract toward the inside of the circumferential direction in the reactor vessel lid 43. And to the front end of the piston rod 132a, a positioning member 133 to be fitted between the adjacent nuts 66 from the outside of the circumferential direction is attached. To the bottom of the case 131, a wheel 134 that is positioned on the box body 122 side is attached. The loads of the guide device 103 and the positioning device 104 are supported by the wheel 134 so that the guide device 103 and the positioning device 104 are rollable on the top surface of the reactor vessel lid 43.

In this case, the case 131, the air cylinder 132, the positioning member 133, and the like constitute each of the positioning devices 104.

Therefore, when the air cylinder 132 is operated at a predetermined position to extend the piston rod 132a, the positioning member 133 is fitted between the adjacent nuts 66, and thus the device body 101 can be positioned at a predetermined position with respect to its moving direction.

Note that, on the box body 122 of the anterior guide device 103, an elongation amount detection device 141 for detecting an elongation amount of the stud bolt 65 between before and after the operation of the fastening/loosening device is mounted. Based on the detection result of this elongation amount detection device 141, it is detected whether fastening is performed while applying an appropriate tension to the bolt tensioner 102. In addition, on the box body 122 of the anterior guide device 103, a nut detection sensor (optical sensor) 142 for detecting the nut 66 is mounted, and on the cases 131 of the positioning devices 104, rotary encoders 143 for detecting a number of rotations of the wheels 134 are mounted. Based on the detection results of the nut detection sensor 142 and the rotary encoders 143, a movement position of the device body 101, and thus of the bolt tensioner 102 is detected.

In the fastening/loosening device of this embodiment, the housing 201 of the bolt tensioner 102 is divided into two in the axial direction. Specifically, as illustrated in FIG. 9, the housing 201 is structured with a first housing 231 and a second housing 232 that are integrally connected by a plurarity of (four in this embodiment) fixing bolts 233. In this case, the first housing 231 and the second housing 232 have the same outer diameter and contact with each other without any gaps. The first housing 231 is formed with a thick section 231a protruding to the inner periphery side of the front end. On the other hand, the overall second housing 232 is thicker than the first housing 231, formed with a flange section 232a protruding to the base end side, and this flange section 232a is fitted to the inner peripheral surface of the thick section 231a. Each of the fixing bolts 233 penetrates through the second housing 232 from its front end side in the axial direction, and the front end of the fixing bolt 233 is screwed into the front end of the first housing 231, whereby the base end of the second housing 232 is fixed to the front end of the first housing 231 without any gaps.

Inside of the first housing 231, the puller bar 202, the puller bar socket 203, the locking ring 205, and the like are housed. On the other hand, inside of the second housing 232, the nut socket 207 and the driven gear 208 are housed. The nut rotation device (driving device) 209 is located between the first housing 231 and the second housing 232, specifically at the front end of the first housing 231.

Specifically, the first housing 231 is formed with an opening 231b in the side surface of the front end, the case 210 of the nut rotation device 206 is fitted into this opening 231b, and the flange section 210a that is integrated with the case 210 is fixed to the outer peripheral surface of the first housing 231 using a plurality of fixing bolts 234. The driven gear 208 is fixed to the outer periphery of the nut socket 207, the outer peripheral surface of the nut socket 207 is rotatably fitted to the flange section 232a of the second housing 232, the outer peripheral surface of the driven gear 208 is rotatably fitted to the thick section 231a of the first housing 231, and the intermediate gears 213 housed in the case 210 of the nut rotation device 206 meshes with this driven gear 208.

The second housing 232 is formed with a tapered surface 232b in a shape that the corner of the front end is cut off, whereby a pressing surface 232c that contacts with the upper surface of reactor vessel lid 43 is formed.

Note here that, the shape of the reactor vessel lid 43 of the reactor vessel 41 may vary according to its specification and the like. Therefore, the bolt tensioner 102 is required to have a shape to avoid interference with protrusions of the reactor vessel lid 43. Therefore, in the bolt tensioner 102 of this embodiment, the housing 201 is constituted of the first housing 231 and the second housing 232, and the second housing 232 can be replacable according to the shape of the reactor vessel lid 43.

Specifically, as illustrated in FIGS. 10-1 and 10-2, second housings 232A, 232B that can be replacements for the second housing 232 are provided in the bolt tensioner 102. The second housing is provided in plural according to shapes of the reactor vessel lids 43. The second housings 232, 232A, and 232B are different in position and inclination angle of the tapered surface 232b, and in area of the pressing surface 232c according to the shape of a roof section 43a, the shape of a connecting section 43b, and the like of the reactor vessel lid 43 so that the second housing does not contact with the reactor vessel lid 43. Therefore, appropriate one of the second housings 232, 232A, and 232B may be selected and attached to the front end of the first housing 231 before operation.

The operation of the fastening/loosening device of this embodiment described above is now described.

In the fastening/loosening device of this embodiment, when the reactor vessel lid 43 is removed from the reactor vessel body 42 as illustrated in FIGS. 1 and 2, the fastening/loosening device 76 is firstly suspended and supported by the four transport devices 73 via the lift device 74, and the fastening/loosening device 76 is lifted down by the lift device 74, whereby the fastening/loosening device 76 is set up with respect to the stud bolt 65 and the nut 66 fastened to the reactor vessel body 42 and the reactor vessel lid 43. Then, the bolt tensioner 102 is lifted up together with the device body 101 so as to locate this bolt tensioner 102 above the stud bolt 65 and the nut 66. In this case, the anterior/posterior guide devices 103 engage with the arranged nuts 66.

In this state, the transport device 73 is operated so that the fastening/loosening device 76 moves in the arrangement direction of the stud bolts 65 and the nuts 66. When the bolt tensioner 102 moves to a position where the bolt tensioner 102 vertically faces the stud bolt 65 and the nut 66, the operation of the transport device 73 is stopped and the positioning device 104 is then operated to position the bolt tensioner 102 is positioned. In other words, the bolt tensioner 102 is merely suspended from the transport device 73 together with the device body 101, and the guide device 103 is provided with a slight gap with the nut 66 for movement, and thus exact positioning of the bolt tensioner 102 with respect to the stud bolt 65 and the nut 66 is difficult. Therefore, when the positioning device 104 is operated to fit the positioning member 133 between the adjacent nuts 66 from the outside, the positioning device 104 (the positioning member 133) and the guide device 103 (the inner guide member 123) sandwich the nut 66, whereby exact positioning of the bolt tensioner 102 is possible.

When the exact positioning of the bolt tensioner 102 with respect to the stud bolt 65 and the nut 66 is completed, in this state, the bolt tensioner 102 is operated to loosen the nut 66. Specifically, while a tension in an axial direction away from the reactor vessel body 42 is applied to the stud bolt 65, the nut 66 is rotated negatively so as to be loosened.

When loosening of one nut 66 is completed, the lift device 74 lifts up the bolt tensioner 102 together with the device body 101 so that this bolt tensioner 102 is moved away to the above of the stud bolt 65 and the nut 66. At this time, the cylinders 121 extend due to weights of the guide device 103, the positioning device 104, and the like, whereby the anterior/posterior guide devices 103 and the positioning device 104 engage with the arranged nuts 66. In this state, when the fastening/loosening device 76 is moved by the transport device 73 along the arrangement direction of the the stud bolts 65 and the nuts 66, the guide devices 103 and the positioning devices 104 roll on the upper surface of the reactor vessel lid 43 by the wheels 134 as described above. Then, the bolt tensioner 102 moves to a position where it faces the stud bolt 65 and the nut 66 vertically, the operation of the transport device 73 is stopped. An operation similar to that described above is thereafter repeated to loosen the plurality of nuts 66 in sequence.

Note that the four fastening/loosening devices 76 are arranged at regular intervals in the peripheral direction. Therefore, when the respective fastening/loosening devices 76 operate in synchronization, the nuts 66 can be loosened without applying uneven loading to the stud bolts 65 and the nuts 66 fastened to the reactor vessel body 42 and the reactor vessel lid 43. When loosening operation for all of the nuts is completed, the four transport devices 73 are stopped. The respective lift devices 74 are then operated to suspend and lift up the fastening/loosening device 76, and all of the fastening/loosening devices 76 are removed using a crane device (not illustrated). After the stud bolts 65 are removed by rotating them using a rotation device (not illustrated), the reactor vessel lid 43 is removed from the reactor vessel body 42 using a crane device.

On the other hand, when the reactor vessel lid 43 is attached to the reactor vessel body 42, an operation similar to that described above is performed, but the rotation direction of the nuts 66 is inverse in the bolt tensioner 102.

When the fastening/loosening device of this embodiment is applied to another reactor vessel 41, the shape of the reactor vessel lid 43 is different. Therefore, appropriate one of the second housings 232, 232A, and 232B is previously selected and attached to the front end of the first housing 231 in the bolt tensioner 102. In this case, the second housing 232 houses the nut socket 207 and the driven gear 208 inside thereof, but the driven gear 208 is supported by the first housing 231, and the nut socket 207 is fixed to this driven gear. Therefore, it is possible to replace only the second housings 232, 232A, and 232B. By selection of appropriate one of the second housings 232, 232A, and 232B according to the shape of the reactor vessel lid 43, one bolt tensioner 102 can be used even when the shape of the reactor vessel lid 43 is different. In addition, the reactor vessel lid 43 has a different fastening force (loosening force), that is, a different tension when its shape is different. Also according to this tension, the second housing can be replaced to a second housing of an appropriate shape.

Since the bolt tensioner 102 houses the puller bar 202, the puller bar socket 203, the locking ring 205, and the like inside thereof, periodic maintenance is required. Even in this case, maintenance of the internal components can be easily performed by removing the second housing 232 from the first housing 231.

As described above, the bolt tensioner of this embodiment is structured by providing: the housing 201; the puller bar 202 located in the axial center portion in the housing 201; the oil pump unit 115 that enables the puller bar 202 to move in the axial direction; the puller bar socket 203 that connects the puller bar 202 and the stud bolt 65 in such a manner that they cannot move relatively in the axial direction; the locking ring 205 that operates the puller bar socket 203; the nut socket 207 rotatably supported in the axial center portion in the housing 201 and closer to the front end than the puller bar 202; and the nut rotation device 209 that is attached to the outer periphery of the housing 201 and that can rotate the nut socket 207 positively and negatively, wherein the housing 201 is structured by integrally connecting the first housing 231 that houses the puller bar 202 and the second housing 232 that houses the nut socket 207.

Therefore, the housing 201 constituted of the first housing 231 and the second housing 232 makes it possible to select the second housing 232 having an appropriate shape according to the shape of the reactor vessel lid 43 and attach it to the first housing 231. Thus, regardless of the shape of the reactor vessel lid 43, the nut 66 can be appropriately fastened to/loosened from the stud bolt 65. In addition, since the housing 201 is made to have the divided structure, the maintainability of the puller bar 202, the nut socket 207, and the like can be improved.

Further, in the bolt tensioner of this embodiment, the nut rotation device 209 is located between the first housing 231 and the second housing 232. It becomes possible to easily attach the nut rotation device 209 to the housing 201, and thus, the assemblability can be improved and the maintainability of the device can be improved. In this embodiment, the nut rotation device 209 is located on the first housing 231 side, but the nut rotation device 209 may be located to be sandwiched by the first housing 231 and the second housing 232.

In addition, in the bolt tensioner of this embodiment, the nut rotation device 209 is located at the front end of the first housing 231. Therefore, the second housing 232 can be removed from the first housing 231, and the maintainability of the nut rotation device 209 can be improved regardless of the attachment state of the nut rotation device 209.

Further, in the bolt tensioner of this embodiment, the externally-toothed driven gear 208 is fixed to the outer periphery of the nut socket 207 and the nut socket 207 is supported by the first housing 231 so that the intermediate gears 213 of the nut rotation device 209 mesh this driven gear 208. Therefore, it is possible to only attach and detach only the second housing 232 without affecting the nut rotation device 209 or the nut socket 207.

In addition, in the bolt tensioner of this embodiment, the second housing 232 is fixed to the first housing 231 by the plurality of fixing bolts 233 penetrating through the second housing 232 from its front end side and screwed into the front end of the first housing 231. Therefore, the second housing 232 can be easily attached to/detached from the first housing 231 by rotating the plurality of fixing bolt 233.

Note that the housing 201 is divided into two in the above described embodiment, but may be divided into three or more and the dividing position is not limited.

### Industrial Applicability

In the above described embodiment, an example of applying the fastening/loosening device of the present invention to the reactor vessel 41 is described, but a member to be fastened is not limited thereto and the fastening/loosening device can be applied to anything, in which a plurality of stud bolts and nuts are arranged along a predetermined direction.

### Reference Signs List

- 11: reactor containment vessel
- 12: pressurized water reactor
- 13: steam generator
- 17: steam turbine
- 21: power generator
- 41: reactor vessel
- 42: reactor vessel body (member to be fastened)
- 43: reactor vessel lid (member to be fastened)
- 46: reactor core basin
- 53: reactor core
- 54: fuel assembly
- 55: control rod
- 58: control rod driving device
- 59: housing
- 65: stud bolt
- 66: nut
- 73: transport device
- 74: lift device
- 76: fastening/loosening device
- 101: device body
- 102: bolt tensioner
- 103: guide device
- 104: positioning device
- 115: oil pump unit (puller bar moving device)
- 201: housing
- 202: puller bar
- 203: puller bar socket
- 205: locking ring
- 206: air cylinder
- 207: nut socket
- 208: driven gear
- 209: nut rotation device (driving device)

## Claims

1. A bolt tensioner that fastens or loosens nuts to be respectively screwed to a plurality of stud bolts by rotating the nuts while applying a tension to the stud bolts in an axial direction away from an object to be fastened, with respect to which the plurality of stud bolts are arranged by screwing them, the bolt tensioner comprising:
a housing having a cylindrical shape;
a puller bar located in an axial center portion in the housing;
a puller bar moving device that enables the puller bar to move in the axial direction;
a puller bar socket that connects the puller bar and the stud bolts in such a manner that they cannot move relatively in the axial direction;
a locking ring that operates the puller bar socket;
a nut socket that is rotatably supported in the axial center portion in the housing and closer to the front end than the puller bar; and
a driving device that is attached to an outer periphery of the housing and that is capable of rotating the nut socket positively and negatively, wherein
the housing is structured with a first housing that houses the puller bar and a second housing that houses the nut socket, the first and second houses being integrally connected.

2. The bolt tensioner according to claim 1, wherein the driving device is located between the first housing and the second housing.

3. The bolt tensioner according to claim 1, wherein the driving device is located at the front end of the first housing.

4. The bolt tensioner according to claim 1 or 2, wherein the nut socket has an outer periphery to which an externally-toothed driven gear is fixed, and the nut socket is supported by the first housing, and an intermediate gear of the driving device meshes the driven gear.

5. The bolt tensioner according to any one of claims 1 to 4, wherein the second housing is fixed to the first housing by the plurality of fixing bolts penetrating through the second housing from a front end side thereof and screwed into the front end of the first housing.
